# EUROPEAN PATENT APPLICATION

(11) **EP 2 700 729 A1**
(43) Date of publication of application: **26.02.2014**
(21) Application number: 12774264.1
(22) Date of filing: 20.04.2012
(51) Int. Cl.: C22C 38/00, C22C 38/50, H01M 8/02, H01M 8/12, C22C 38/54

(54) **STEEL FOR SOLID OXIDE FUEL CELLS HAVING EXCELLENT OXIDATION RESISTANCE, AND MEMBER FOR SOLID OXIDE FUEL CELLS USING SAME**

(30) Priority: 22.04.2011 JP 2011096264
(71) Applicant: Hitachi Metals, Ltd., Tokyo 105-8614 (JP)
(72) Inventor: YASUDA Nobutaka, Yasugi-shi, Shimane 692-8601 (JP); UEHARA Toshihiro, Yasugi-shi, Shimane 692-8601 (JP); TANAKA Shigenori, Yasugi-shi, Shimane 692-8601 (JP); YAMAMURA Kazuhiro, Yasugi-shi, Shimane 692-8601 (JP)
(74) Representative: Beetz & Partner
(86) International application number: PCT/JP2012/060722
(87) International publication number: WO 2012/144600

(57) **Abstract**

Provided are: steel for solid oxide fuel cells, which is capable of ensuring sufficient oxidation resistance even if a predetermined amount of nitrogen is contained therein; and a member for solid oxide fuel cells, which uses the steel for solid oxide fuel cells. This steel for solid oxide fuel cells having excellent oxidation resistance contains, in mass%, 0.022% or less (including 0%) of C, 0.01-0.05% ofN, 0.01 % or less (including 0%) of O, 0.15% or less (including 0%) of Al, 0.15% or less (including 0%) of Si, 0.1-0.5% of Mn, 22.0-25.0% of Cr, 1.0% or less (excluding 0%) ofNi, 1.5% or less (including 0%) of Cu, 0.02-0.12% of La and 0.01-1.50% of Zr with La + Zr being 0.03-1.60%, and 1.5-2.5% of W, with the balance made up of Fe and impurities. The ratio of Zr/(C + N) in mass% is preferably 10 or more.

## Description

### Technical Field

The present invention relates to steels for solid oxide fuel cells with improved oxidation resistance, and a member for solid oxide fuel cells using the steels.

### Background Art

Solid oxide fuel cells have properties such as high power generation efficiency, low emission of SOx, NOx and CO₂, good responsiveness to a fluctuation of load, compactness, etc., and are therefore expected to be applied to various power generation systems such as a large-scale centralized type one, a suburban distributed type one, a home power generation system, etc., as an alternative for thermal power generation. Under such a situation, ceramics have been mainly used for parts for solid oxide fuel cells, such as separators, interconnectors and current collectors because the parts are required to have properties such as good oxidation resistance, good electrical conductivity, and thermal expansion coefficient close to those of an electrolyte and an electrode at a high temperature of around 1000°C.

However, ceramics have poor workability and are expensive, and furthermore, an operating temperature of solid oxide fuel cells has been reduced to around 700 to 900°C in recent years. Therefore, studies have been actively made in order to use metallic parts with good oxidation resistance for parts such as separators since metallic parts are less expensive, have better workability and than ceramics.

The metallic parts used in solid oxide fuel cells described above are required to have excellent oxidation resistance. The applicant also has proposed ferritic stainless steels with excellent oxidation resistance, in JP-A-2007-16297 (Patent Literature 1), JP-A-2005-320625 (Patent Literature 2), W02011/034002 (Patent Literature 3) and the like.

### Citation List

### Patent Literature

Patent Literature 1: JP-A-2007-016297
Patent Literature 2: JP-A-2005-320625
Patent Literature 3: W02011/034002

### Summary of Invention

### Technical Problem

The above described ferritic stainless steels proposed by the applicant have excellent oxidation resistance and electrical conductivity.

Incidentally, as described in Patent Literature 3, nitrogen(N) is an element which reduces oxidation resistance. Therefore nitrogen content is restrained to be low.

According to the studies of the present inventor, it has been found out that vacuum refining using a small furnace has a high degassing effect and facilitates nitrogen reduction for ferritic stainless steels, but a problem has been revealed that, in the case of a large furnace, reduction of nitrogen is difficult and reduction cost could be increase. In response to this, there is a method of using law materials with low nitrogen content, but the method is not suitable because it leads to product cost increase.

An object of the present invention is to provide steel with good oxidation resistance and a member using the steels for solid oxide fuel cells even if a predetermined amount of nitrogen is contained.

### Solution to Problem

The present inventors have conducted a study on chemical compositions for obtaining good oxidation resistance stably based on ferritic stainless steels proposed in Patent Literatures 1, 2 and 3 described above.

As a result, the inventors have found out that if the range of basic alloy composition is narrowed optimally, and thereafter, specific elements such as C, Si, Al and O are regulated, good oxidation resistance can be obtained stably even if a small amount of nitrogen (N) is contained, thereby achieving the present invention.

Namely, the present invention is steel for solid oxide fuel cells having excellent oxidation resistance, consisting of, by mass%, C: 0.022% or less (including 0%), N: 0.01 % to 0.05%, O: 0.01% or less (including 0%), Al: 0.15% or less (including 0%), Si: 0.15% or less (including 0%), Mn: 0.1% to 0.5%, Cr: 22.0% to 25.0%, Ni: 1.0% or less (excluding 0%), Cu: 1.5% or less (including 0%), La: 0.02% to 0.12%, Zr: 0.01% to 1.50%, La+Zr: 0.03% to 1.60%, W: 1.5% to 2.5%, and the balance consisting of Fe and impurities.

The present invention is preferably the steel for solid oxide fuel cells with excellent oxidation resistance, wherein the ratio of Zr/(C+N) by mass% is 10 or more.

The present invention is further preferably the steel for solid oxide fuel cells with excellent oxidation resistance, wherein by mass%, the amount of the Si is less than 0.1 %.

The present invention is further preferably the steel for solid oxide fuel cells with excellent oxidation resistance, wherein by mass%, the amount of the C is 0.020% or less.

Further, the present invention is a member for solid oxide fuel cells using the above described steel for solid oxide fuel cells, wherein the member forms oxide layer which consists of a spinel-type oxide layer containing Mn on a surface layer side and a Cr oxide layer is formed under the spinel-type oxide layer, and the thickness of the oxide layer is 0.3 µm to 2.0 µm.

### Advantageous Effects of Invention

The steel for solid oxide fuel cells of the present invention can have stably improved oxidation resistance, and thereby can stably reduce degradation of performance of fuel cells. Further, the steel for solid oxide fuel cells maintains properties such as electrical conductivity and a small difference in thermal expansion between the steel and an electrolyte or electrode material. Accordingly, the invention can significantly contribute to improvement of durability and high performance even when it is used for a metallic material in the solid oxide fuel cell, such as a separator, an interconnector and the like which is required to have high performance.

### Brief Description of Drawing

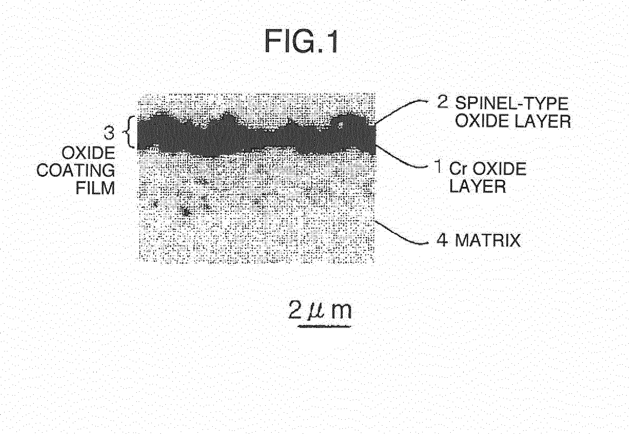

[Fig. 1] Fig. 1 is a cross-sectional microphotograph of the steel for solid oxide fuel cells after forming oxide layers according to the invention.

### Description of Embodiments

Hereinafter, the present invention will be described in detail.

The reason why the content of each element in the steel for solid oxide fuel cells according to the present invention is specified is as follows. Note that the content of each element is indicated by mass%.

C: not more than 0.022% (including 0%)

C is one of the most important elements which should be limited to compensate reduction of oxidation resistance when N is contained. C is an element which decreases the amount of Cr in a matrix by combining with Cr and reduces oxidation resistance. Therefore, in order to improve oxidation resistance, it is effective to make the content of C as low as possible, and in the present invention, C is limited to a range of not more than 0.022% (including 0%).

Further, since C is reduced relatively easily by refining as compared with N which will be described later, a more preferable upper limit is 0.020%.

N: 0.01% to 0.05%

N is an element which deteriorates oxidation resistance as described above, and therefore the N content is preferably low in general. However, in order to reduce nitrogen, an expensive raw material with a low content of nitrogen is often used. In the present invention, by strictly limiting the contents of C described above as well as Si and Al both of which will be described later, excellent oxidation resistance equivalent to steel for solid oxide fuel cells with reduced N can be realized even if 0.01 % or more ofN is contained. Meanwhile, N is an austenite-forming element. Therefore, when N is excessively contained in the ferritic stainless steel of the present invention, it forms not only an austenitic phase so that the single ferritic phase is not able to be maintained, but also a nitride-type inclusion with Cr and the like. Thus, an amount of Cr in a matrix is reduced, and thereby oxidation resistance is deteriorated. Further, the nitride-type inclusion also becomes a cause of decreasing hot workability and cold workability. If the amount of N is excessive, excellent oxidation resistance cannot be obtained even with the optimization of the components as described above, and therefore, N is limited to not more than 0.05%.

O: not more than 0.01 % (including 0%)

O is one of the important elements which should be limited to compensate deterioration of oxidation resistance when N is contained. O forms an oxide-type inclusion together with Al, Si, Mn, Cr, Zr, La and the like, and the formation of oxide-type inclusion not only decreases hot workability and cold workability, but also reduces the dissolved amounts of La, Zr and the like which significantly contribute to improvement of oxidation resistance so that the effect of these elements on oxidation resistance becomes small. Accordingly, the oxygen content may be limited to not more than 0.010% (including 0%). The oxygen content is preferably not more than 0.008%.

Al: not more than 0.15% (including 0%)

Al is one of the elements which should be limited to compensate deterioration of oxidation resistance when N is contained. Al forms Al₂O₃ in a granular shape and an acicular shape in a metal matrix in a vicinity of a Cr oxide layer at an operating temperature of the solid oxide fuel cells. This makes outward diffusion of Cr ununiform, and prevents stable formation of the Cr oxide coating film, thereby deteriorating oxidation resistance. Thus, Al is limited to a range of not more than 0.15% (including 0%) in the present invention. In order to more reliably obtain the effect of reducing Al described above, an upper limit of Al is determined to be 0.1 % or less, and is further preferably determined to be 0.05% or less. The content ofAl is preferably not more than 0.03%.

Si: not more than 0.15% (including 0%)

Si is one of the elements which should be limited to compensate deterioration of oxidation resistance when N is contained. Si forms SiO₂ layer near an interface between a Cr oxide layer and a matrix at an operating temperature of the solid oxide fuel cell. Since an electrical specific resistance of SiO₂ is higher than that of a Cr oxide, SiO₂ reduces electrical conductivity. Moreover, Si deteriorates oxidation resistance by hindering formation of a stable Cr oxide layer similarly to the formation of Al₂O₃ described above. Therefore, the Si content is limited to a range of not more than 0.15% (including 0%) in the present invention. In order to more reliably obtain the effect of reducing Si described above, the upper limit of Si is determined to be less than 0.1 %, is further preferably determined to be not more than 0.05%, and is further preferably determined to be not more than 0.03%.

Mn: 0.1% to 0.5%

Mn is an element that forms a spinel-type oxide together with Cr. The spinel-type oxide layer containing Mn is formed on an outer side (surface side) of a Cr₂O₃ oxide layer. The spinel-type oxide layer has a protection effect of preventing Cr evaporation from the steel for the solid oxide fuel cells. The evaporated Cr forms a complex oxide deposited onto a ceramic part such as an electrolyte/electrode and causes the degradation of the performance of fuel cells. The spinel-type oxide acts disadvantageously for oxidation resistance since it usually has a larger oxidation rate compared with that of Cr₂O₃. However, it has an advantageous effect of maintaining a surface smoothness of the oxide layers and decreasing of contact resistance and preventing the evaporation of Cr which is poison to the electrolyte. Therefore, 0.1 % of Mn is required at the minimum. A preferable lower limit of Mn is 0.2%.

On the other hand, excessive addition of Mn increases a growth rate of the oxide layer, thereby deteriorating oxidation resistance. Accordingly, an upper limit of Mn is determined to be 0.5%. A preferable upper limit of Mn is 0.4%.

Cr: 22.0% to 25.0%

Cr is an element necessary to realize excellent oxidation resistance by forming a dense Cr oxide layer, typically Cr₂O₃, at an operating temperature of the solid oxide fuel cells. Further, Cr is an important element to maintain electrical conductivity. Cr is required to be contained by 22.0% at the minimum to stably obtain good oxidation resistance and electrical conductivity.

However, excessive addition of Cr is not much effective in the improvement of oxidation resistance, but rather causes deterioration of workability, and therefore, an upper limit of Cr is defined to be 25.0%. A preferable lower limit of Cr is 23.0%.

Ni: not more than 1.0% (excluding 0%)

Addition of a small amount of Ni is effective in improvement of toughness. Further, since Ni has an effect of improving hot workability, Ni is added by an amount exceeding 0%. Further, there is concern that hot workability is deteriorated because of red shortness if Cu is contained in the present invention. In order to prevent that, this is effective to add a small amount of Ni. In order to more reliably obtain the aforementioned effect, a lower limit of Ni is preferably determined to be 0.1 %. A further preferable lower limit is 0.2%.

On the other hand, Ni is an austenite-forming element, and when Ni is contained excessively, a ferrite-austenite binary phase structure is formed easily, thereby increasing a thermal expansion coefficient. Moreover, Ni may be inevitably added in the steel, for example, if raw melting materials including recycled materials are used when manufacturing a ferritic stainless steel as in the present invention. If the Ni content becomes excessive, there is a concern the contact decrease with a ceramic part, and therefore, addition or mixture of a large amount of Ni is not preferable. Therefore, in the present invention, an upper limit of Ni is determined to be 1.0% or less.

Cu: not more than 1.5% (including 0%)

The steel for solid oxide fuel cells of the present invention forms a Cr oxide having a two-layer structure in which a spinel-type oxide layer containing Mn is formed on a Cr₂O₃ oxide layer, at an operating temperature of around 700 to 900°C.

Cu has an effect of making the spinel-type oxide containing Mn formed on the Cr₂O₃ oxide layer dense, and thereby reducing evaporation of Cr from the Cr₂O₃ oxide layer. Therefore, Cu can be added with an upper limit determined to be 1.5%. If Cu is added beyond 1.5%, a Cu phase precipitation is occurred in metal matrix, so that it could be difficult to form dense Cr oxide in the place of the Cu phase, and oxidation resistance could be lower, hot workability could be lower, and a ferritic phase could be unstable. Therefore, the Cu content is determined to be not more than 1.5% (including 0%).

La: 0.02% to 0.12%

Addition of a small amount of La makes an oxide layer mainly including Cr dense, and improves adhesiveness of Cr oxide layer, thereby causes good oxidation resistance to be exhibited so that addition of La is indispensable. Addition of less than 0.02% of La has a small effect of improving density and adhesiveness of an oxide layer, whereas if more than 0.12% of La is added, there is a concern that inclusions such as oxide including La increase and hot workability deteriorates, and therefore, the content of La is determined to be 0.02% to 0.12%. A preferable lower limit of La is 0.03%, and a more preferable lower limit is 0.04%. Further, a preferable upper limit of La is 0.11%, and a more preferable upper limit is 0.10%.

Zr: 0.01 % to 1.50%

Addition of a small amount of Zr also has an effect of significantly improving oxidation resistance and electrical conductivity by making the oxide layer dense and improving adhesiveness of the oxide layer. Addition of less than 0.01 % of Zr has a small effect of improving density and adhesiveness of the oxide layer, whereas if more than 1.50% of Zr is added, there is a concern that a number of coarse compounds containing Zr are formed and hot workability and cold workability deteriorate, and therefore, the content of Zr is determined to be 0.01 % to 1.50%. A preferable lower limit of Zr is 0.10%, and a more preferable lower limit is 0.20%. Further, a preferable upper limit of Zr is 0.85%, and a more preferable upper limit is 0.80%.

La + Zr: 0.03% to 1.60%

In the present invention, the aforementioned La and Zr are preferably added in combination since both of them have the excellent effect of improving oxidation resistance at a high temperature. In this case, if the total amount of La and Zr is smaller than 0.03%, the effect of improving oxidation resistance is small, whereas if the total amount of La and Zr is more than 1.60%, a number of compounds containing La and Zr are formed, and thereby deterioration of hot workability and cold workability is concerned. Therefore, the total amount of La and Zr is determined to be 0.03% to 1.60%. A preferable lower limit of La + Zr is 0.15%, and a more preferable lower limit is 0.30%. Further, a preferable upper limit of La + Zr is 1.20%, a more preferable upper limit is 0.85%, and a far more preferable upper limit is 0.80%.

W: 1.5% to 2.5%

In general, Mo is known as an element which exhibits the same effect as W, regarding solid solution strengthening and the like. However, W has a higher effect of suppressing outward diffusion of Cr during oxidation at an operating temperature of solid oxide fuel cells, compared with Mo. Therefore, W is indispensably added solely in the present invention.

Decrease of the Cr amount in the alloy after formation of the Cr oxide layer can be suppressed since the outward diffusion of Cr being reduced by the addition of W. Further, W can also prevent anomalous oxidation of the alloy and maintain excellent oxidation resistance. In order to obtain the effect, at least 1.5% of W is required. However, since addition of more than 2.5% of W deteriorates hot workability, an upper limit of W is determined to be 2.5%.

Next, a ratio of Zr, C and N that is specified as a preferable range will be described.

In the present invention, as the ratio of mass% of Zr, C and N, Zr/(C+N) is preferably controlled to be a constant amount or more. In the present invention, a small amount ofN can be allowed by reducing C amount to not more than 0.022%, by mass%, but as described above, both C and N are elements which decrease the amount of Cr effective in oxidation resistance by binding with Cr in a metal matrix. Addition of Zr suppresses binding of C and N with Cr by forming a Zr carbide, Zr nitride and Zr carbonitride, and can maintain an effective Cr amount in the ferritic phase matrix, in addition to the above described effect.

In order to more reliably ensure the Zr amount for bringing about the densification effect and adhesiveness improving effect of the oxide layer described above, Zr/(C+N) : not less than 10 is determined.

In the present invention, it is assumed that the balance other than the above elements is Fe and inevitable impurities. Hereinafter, typical impurities and preferable upper limit thereof will be shown as follows. Note that since these elements are impurity, preferable lower limits of the respective elements are 0%.

Mo: not more than 0.2%

Since Mo reduces oxidation resistance, Mo is not positively added, but a content of 0.2% or less of Mo does not significantly affect an oxidation behavior, and therefore, a content of Mo is limited to not more than 0.2%.

S: not more than 0.015%

Since S forms a sulfide-type inclusion with rare earth elements and decreases an effective amount of the rare earth element which is effective in oxidation resistance, and not only reduces oxidation resistance, but also deteriorates hot workability and alloy surface condition, and therefore, the content of S may be determined to be not more than 0.015%. Preferably, the content of S is not more than 0.008%.

P: not more than 0.04%

P is an element easy to be oxidized than Cr which forms an oxide layer, and deteriorates oxidation resistance, and therefore, the content of P may be limited to not more than 0.04%. The content of P is preferably not more than 0.03%, further preferably not more than 0.02%, and further more preferably not more than 0.01 %.

B: not more than 0.003%

B increases a growth rate of oxide layer at a high temperature of not less than about 700°C, and deteriorates oxidation resistance. Moreover, B increases a surface roughness of the oxide layer and decreases a contact area between the oxide layer and an electrode, thereby increasing contact resistance. Therefore, the content of B may be limited to not more than 0.003%, and preferably reduced as low as possible to 0%. A preferable upper limit thereof is not more than 0.002%, and a further preferable upper limit is less than 0.001 %.

H: not more than 0.0003%

When H is contained excessively in a Fe-Cr based ferritic matrix, H is easy to be concentrated in defect portions of grain boundaries and the like, and may cause hydrogen embrittlement, thereby generating cracking during manufacturing, and therefore, H may be preferably limited to not more than 0.0003%. The content of H is more preferably not more than 0.0002%.

Next, an example of a specific morphology of oxide layer of parts a member for solid oxide fuel cells using the steel of the present invention will be described.

Alloy composition of the steel for solid oxide fuel cells of the present invention is defined so as to form stable oxide layer with high density and high adhesiveness in the actual atmosphere, and the steel exhibits major necessary properties such as good oxidation resistance, electrical conductivity and thermal expansion property even if the steel directly used. The oxide layer which is formed in the steel of the present invention is composed of two layers which are a spinel-type oxide layer containing Mn on a surface side, and a Cr oxide (chromia) layer under the spinel-type oxide layer. Hereinafter the two layers in combination are called the oxide layer.

Further, by artificially and preliminary forming the oxide layer which is formed in the actual atmosphere, more stable oxidation resistance, electrical conductivity, and the property which improves durability such as a Cr evaporation resistance can be obtained. In order to form the stable and dense oxide layer with favorable adhesiveness before operation, it is desirable to form the oxide layer on surface of steel for solid oxide fuel cells at higher temperature than operating temperature after predetermined shaping. Since the main operating temperature of solid oxide fuel cells is around 700 to 850°C, preliminary oxidation for artificially forming the oxide layer is preferably carried out at a temperature of not lower than 850°C which is higher than the operating temperature. On the other hand, if preliminary oxidation is carried out at a temperature exceeding 1100°C, there is a concern that the crystal grain size of the steel becomes coarse and the high temperature strength and toughness are reduced, and therefore, the oxidizing processing temperature is determined to be 850 to 1100°C.

Note that if the thickness of the oxide layer on the surface of the steel that is formed at preliminary oxidation is smaller than 0.3 µm, it becomes difficult to form a uniform oxide layer, whereas when the thickness exceeds 2.0 µm, the initial electrical conductivity reduces, and therefore, the thickness of the oxide layer is determined to be 0.3 to 0.2 µm, while it depends on the oxidation time and the oxidation atmosphere.

The steel for solid oxide fuel cells of the present invention suppresses Cr evaporation and has excellent oxidation resistance as described above, and therefore, is suitably applied to various members of solid oxide fuel cells such as separators, interconnectors, current collecting parts, end plates, current connecting parts and fastening bolts, for example. Further, the steel for solid oxide fuel cells can be used by being worked into various shapes such as powder, powder sintered compact, powder sintered porous compact, a net, a thin wire, a sheet, bar stock, members obtained by press forming of these materials, members obtained by etching, and members obtained by machining.

Further, in order to suppress Cr evaporation, ceramics coating may be applied onto a cathode side surface of the steel for solid oxide fuel cells, by carrying out the oxidation of the present invention before coated, further oxidation resistance and Cr evaporation resistance property can be obtained.

### Examples

The invention will be described in more detail with the following examples.

The steel according to the present invention and comparative steel were melted with a vacuum induction furnace or a vacuum refining furnace to produce ingots. For the vacuum melting or the vacuum refining, operating conditions were controlled in order to suppress C, Si, Al and impurity elements within determined values. The operating conditions mentioned here represent one or combinations of strict selection of raw materials, degree of vacuum in a furnace, Ar bubbling and the like.

Thereafter, the ingots were worked into various sizes by hot forging, hot rolling and plastic working such as cold rolling, and thereafter, annealed at various temperatures from 780 to 950°C for several minutes to one hour to produce annealed materials. Table 1 shows chemical compositions of alloys of Nos. 1 to 10 of the present invention, chemical compositions of alloys of Nos. 11 to 15 of a comparative example, and Zr/(C+N) which is the ratio of mass% of Zr, C and N of each alloy.

Impurity elements not shown in Table 1 ranged Mo≤0.2%, H≤0.0003%, B<0.001%, P≤0.04% and S≤0.015%.

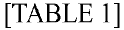

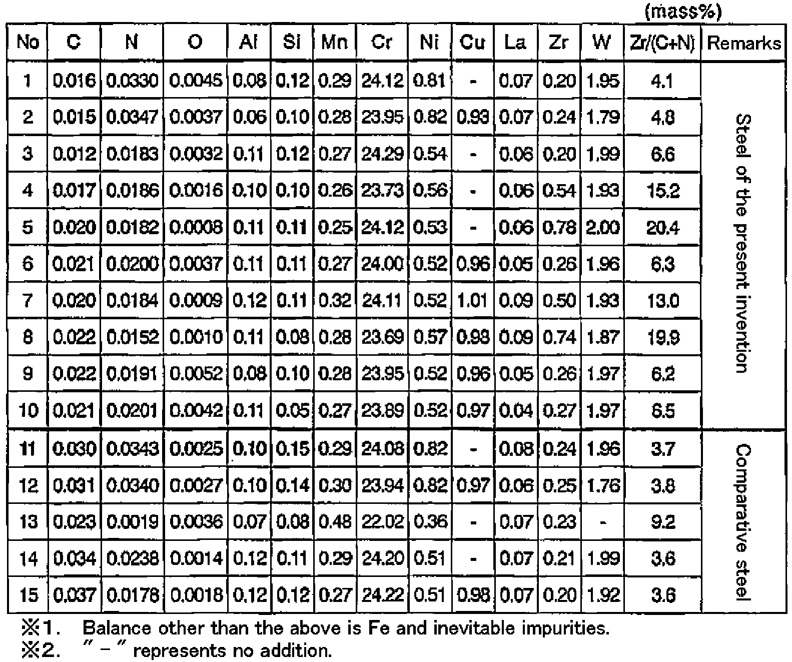

Specimens were cut out from the above described annealed materials and were subjected to various tests.

First, a plate-like specimen of 10 mm (w) x 10 mm (1) x 3 mm (t) was used to measure oxidation weight gain after heating at 850°C for 2,000 hours in air for the alloys of Nos. 1 to 10 according to the present invention and the alloys of Nos. 11 to 15 of the comparative example. Further, an average thermal expansion coefficient from 30°C to 850°C was measured.

Next, an accelerated oxidation test was carried out with use of extremely thin plate-shaped specimens of 15 mm (w) x 15 mm (1) x 0.1 mm (t), for the alloys of Nos. 1 and 2 according to the present invention, and the alloys of Nos. 11 to 13 of the comparative example.

Further, for the alloys of Nos. 7 to 10 of the present invention, and the alloys of Nos. 13 and 14 of the comparative example, an accelerated oxidation test was carried out with thin plate-shaped specimens of 15 mm (w) x 15 mm (1) x 0.3 mm (t).

The test results are summarized in Table 2.

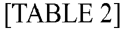

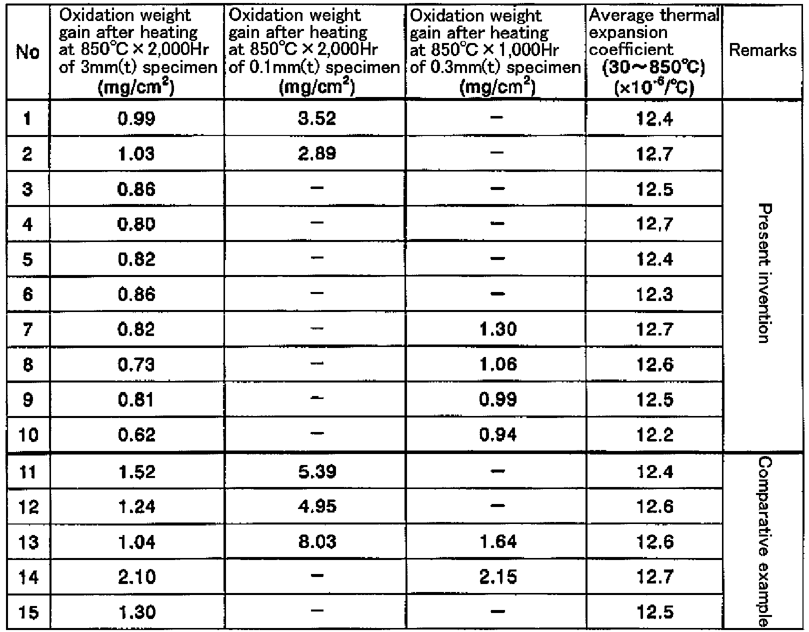

The alloys of Nos. 1 to 10 according to the present invention in which the C, Si and Al contents were simultaneously sufficiently limited, and Mn, Cr, W, La and Zr contents were optimized showed smaller oxidation weight gains and better oxidation resistance than the alloys of Nos. 11 to 15 of the comparative example after heating the thick plate-shaped specimens with thickness of 3 mm at 850°C for 2000 hours in air, and improved in oxidation resistance.

Further, a large difference is not found between the oxidation weight gains of the alloys of Nos. 1 and 2 of the present invention, and that of the alloy of No. 13 of the comparative example with a low amount of N. Thereby, it was found that the amount of N of around 0.02 mass% can be allowed by limiting C.

Further, the alloys of Nos. 4, 5, 7 and 8 of the present invention with Zr/(C+N) of not less than 10 were able to reduce the oxidation weight gains by about 20% compared with the alloy of No. 13 of the comparative example.

Next, heating thin plate-shaped specimens of a thickness of 0.1 mm at 850°C for 2,000 hours in air, and heating thin plate-shaped specimens of a thickness of 0.3 mm at 850°C for 1000 hours in air were carried out in order to accelerate oxidation, and the results showed that the oxidation weight gains of the respective alloys of the present invention were obviously smaller than those of the respective alloys of the comparative example.

Further, in spite of the fact that the amount of elements other than C and Zr were at the same levels between the alloys of Nos. 1, 2 and 7 to 10 of the present invention and the alloys of Nos. 11, 12, 14 and 15 of the comparative steel, the effect of improving oxidation resistance was obtained by limiting C, and limiting Zr/(C+N) to not less than the fixed amount.

Further, the steel for solid oxide fuel cells of the present invention with increased oxidation resistance had a thin oxide layer composed of an oxide with high electric resistance, and therefore, had small electric resistance at 750°C after heating at 850°C for 1000 Hr in air, and showed better electrical conductivity compared with the respective alloys of the comparative example.

Note that it is understandable that all of the steels according to the present invention have an average thermal expansion coefficient at temperatures from 30 to 850°C, in the order of about 12 x 10⁻⁶ / °C, which is close to that of stabilized zirconia as a solid electrolyte.

Next, Cr evaporation test was performed.

Thick plate-shaped specimens of 10 mm x 10 mm x 3 mm was put between ceramic plates, and put into the electric furnace at 850°C for 30 hours in air. The gap of 0.4mm was made between the upper ceramic plates and the upper side of the test piece. Then the amounts of the Cr oxides deposited on the ceramic plates were visually observed by colored situations of the ceramic plates.

As a result, it was found that the alloys of Nos. 1 and 3 to 5 according to the present invention showed the Cr evaporation amounts substantially equivalent to that of the alloy of No. 13 of the comparative example, whereas in the alloys of Nos. 2 and 6 to 10 according to the present invention to which Cu was added, the Cr evaporation was reduced to be equivalent to or less than that of the alloy of No. 13 of the comparative example. It was thought that the spinel-type oxide layer containing Mn was densified by the addition of Cu.

Next, in order to produce a member for solid oxide fuel cells, the morphology of the oxide layer which was artificially formed by oxidation before operation was confirmed.

Oxidation at 950°C x 12 hours was performed with the alloy of No. 6 of the present invention to form the oxide layer. A photograph of optical microstructure of the obtained oxide layer is shown in Fig. 1. The crystal structure of the oxide layer was measured by an X-rays analyzer. The oxide layer 3 having a two-layer structure was able to be confirmed, in which a spinel-type oxide layer 2 containing Mn and Cr on a surface side was formed, and a Cr oxide layer 1, Cr₂O₃, was formed under the spinel-type oxide layer 2 (on a matrix 4 side). Further, the thickness of the oxide layer 3 was 1.5 µm at the maximum. Therefore, more stable oxidation resistance, electrical conductivity and the property that improves durability such as a Cr evaporation resistance can be obtained.

### Industrial Applicability

The steel according to the present invention has good oxidation resistance even after heating for long hours at around 700 to 850°C is carried out. The steel also forms oxide coating layers having good electrical conductivity and effect of suppressing Cr evaporation in this temperature range, and has a property of having a small thermal expansion difference from ceramics. Therefore, the steel can be applied for parts required oxidation resistance for solid oxide fuel cells with or without working into various shapes such as a steel bar, a wire material, powder, powder sintered compact, porous compact, or steel foil. Moreover, the steel of the present invention having various shapes can be used by subjecting it to preliminary oxidation and further to ceramic coating as need arises.

### Reference Signs List

- 1: Cr OXIDE LAYER
- 2: SPINEL-TYPE OXIDE LAYER
- 3: OXIDE LAYER
- 4: MATRIX

## Claims

1. A steel for solid oxide fuel cells having excellent oxidation resistance, consisting of, by mass%,
C: 0.022% or less (including 0%);
N: 0.01% to 0.05%;
O: 0.01 % or less (including 0%);
Al: 0.15% or less (including 0%);
Si: 0.15% or less (including 0%);
Mn: 0.1 % to 0.5%;
Cr: 22.0% to 25.0%;
Ni: 1.0% or less (excluding 0%);
Cu: 1.5% or less (including 0%);
La: 0.02% to 0.12%;
Zr: 0.01% to 1.50%;
La+Zr: 0.03% to 1.60%;
W: 1.5% to 2.5%, and
the balance consisting of Fe and impurities.

2. The steel for solid oxide fuel cells having excellent oxidation resistance according to claim 1, wherein the ratio of Zr/(C+N) by mass% is 10 or more.

3. The steel for solid oxide fuel cells having excellent oxidation resistance according to claim 1 or 2, wherein the amount of Si is less than 0.1 % (including 0%), by mass%.

4. The steel for solid oxide fuel cells having excellent oxidation resistance according to any one of claims 1 to 3, wherein the amount of C is 0.020% or less (including 0%), by mass%.

5. A member for a solid oxide fuel cell using the steel for solid oxide fuel cells according to any one of claims 1 to 4, wherein the member comprises a spinel-type oxide layer containing Mn on a surface side of the steel for solid oxide fuel cells, Cr oxide layer is formed under the spinel-type oxide layer, and the oxide layer has a thickness of 0.3 µm to 2.0 µm.
